# EUROPÄISCHE PATENTSCHRIFT

(11) **EP 1 464 214 B1**
(45) Veröffentlichungstag und Bekanntmachung des Hinweises auf die Patenterteilung: **02.07.2008**
(21) Anmeldenummer: 04000908.6
(22) Anmeldetag: 16.01.2004
(51) Int. Cl.: A01D 41/14, A01B 73/04

(54) **Erntemaschine zum Ernten von stängelartigem Erntegut wie Mais oder dergleichen**
Harvester for stalk-like crop like maize
Machine pour récolter des plantes à tige comme le maïs

(30) Priorität: 29.01.2003 DE 10303380
(43) Veröffentlichungstag der Anmeldung: 06.10.2004
(73) Patentinhaber: CLAAS Saulgau GmbH, 88348 Bad Saulgau (DE)
(72) Erfinder: Rauch, Hans, 88348 Bad Saulgau (DE)
(74) Vertreter: Roth, Klaus

(56) Entgegenhaltungen:
- EP-A- 0 992 187
- EP-A- 1 093 707
- EP-A- 1 179 292
- US-A- 5 845 472

## Beschreibung

Die Erfindung betrifft eine Erntemaschine zum Ernten von stängelartigem Erntegut wie Mais oder dergleichen nach dem Oberbegriff des Anspruchs 1.

Eine solche Erntemaschine ist beispielsweise durch die Druckschrift EP 0 992 187 A1 bekannt geworden. Diese Druckschrift beschreibt eine selbstfahrende Maschine mit einem Erntevorsatz, der nebeneinander angeordnete rotierende Einzugs und Mähtrommeln aufweist. Diese Einzugs- und Mähtrommeln sind an verschwenkbaren Rahmenelementen angebracht. Hierbei sind vier Einzugs- und Mähtrommeln an einem in Fahrtrichtung vor der Maschine angeordneten Grundrahmen angebracht, während seitlich davon an schwenkbaren Rahmenteile jeweils zwei und an einem weiteren, ebenfalls schwenkbaren Außenrahmen jeweils eine Einzugs- und Mähtrommel angeordnet ist. In einer Transportstellung werden die seitlichen Rahmenteile sowie die Außenrahmenteile nach oben und nach innen geschwenkt, wodurch sich dementsprechend die gegenüber der Arbeitsstellung deutlich reduzierte Transportbreite ergibt.

Die Maschine der beschriebenen Art weist den Nachteil auf, dass die nach innen geschwenkten Mäh- und Einzugseinheiten in Fahrtrichtung vor der Fahrerkabine angeordnet sind und somit je nach Bauform unter Umständen die Sicht auf die Fahrbahn in Fahrtrichtung beeinträchtigen können.

Aufgabe der Erfindung ist es daher, eine entsprechende Maschine mit verbesserter Sicht in Fahrtrichtung vorzuschlagen.

Diese Aufgabe wird, ausgehend von einer Maschine nach dem Oberbegriff des Anspruchs 1, durch dessen kennzeichnende Merkmale gelöst.

Durch die in den Unteransprüchen genannten Maßnahmen sind vorteilhafte Ausführungen und Weiterbildungen der Erfindung möglich.

Dementsprechend zeichnet sich eine erfindungsgemäße Erntemaschine dadurch aus, dass wenigstens eine als Zwischenflügel ausgebildete Mäh- und Einzugseinheit und wenigstens eine als Außenflügel ausgebildete Mäh- und Einzugseinheit außenseitig an einer Basiseinheit angebracht sind, wobei der Außenflügel und der Zwischenflügel in entgegengesetztem Drehsinn schwenkbar sind. Auf diese Weise lässt sich ein Zusammenklappen des Außenflügels mit dem Zwischenflügel im Randbereich des Basiseinheit verwirklichen, so dass es möglich ist, den Mittelbereich abgesehen von dem Aufbau der an der Basiseinheit notwendigen Einzugs und Mähorgane frei von weiteren, in der Höhe auftragenden Bauelementen zu halten.

Auf diese Weise ergeben sich konstruktive Möglichkeiten, die Anordnung der Mäh- und Einzugseinheiten in der Transportstellung so anzuordnen, dass in Geradeaus-Richtung ein weitgehend freier Blick auf die Fahrbahn möglich ist.

In einer bevorzugten Ausführungsform wird die Basiseinheit vorgesehen, die im Wesentlichen mittig in der Maschine angebracht ist. Eine solche Anordnung bietet verschiedene Vorteile.

Zum einen kann ein wesentlicher Teil der Arbeitsbreite mit einem einstückigen Rahmenaufbau abgedeckt werden. Darüber hinaus ist die Einkopplung des Antriebs von dem Fahrzeug in das entsprechende Vorsatzgerät mit einer solchen Basiseinheit leichter zu bewerkstelligen. Darüber hinaus kann die Höhenverstellung des Vorsatzgerätes an einer solchermaßen ausgestalteten Basiseinheit in herkömmlicher Weise ausgebildet werden. Je weiter die Befestigung am Fahrzeug sich über die Fahrzeugbreite erstreckt, umso stabiler bzw. kippsicherer lässt sich darüber hinaus die gesamte Aufhängung des Vorsatzgerätes an dem Fahrzeug realisieren. Daher wird vorteilhafterweise die Basiseinheit nicht nur mittig vor dem Fahrzeug angeordnet, sondern darüber hinaus so ausgebildet, dass sie sich im Wesentlichen über die gesamte Breite des Fahrzeugs erstreckt. Diese Breite entspricht im Wesentlichen auch der Gesamtbreite der Maschine in Transportstellung des Vorsatzgerätes.

Die volle Ausnutzung der Fahrzeugbreite für die Basiseinheit hat darüber hinaus den Vorteil, dass die in Arbeitsstellung außerhalb der Fahrzeugbreite liegenden schwenkbaren Einheiten des Vorsatzgerätes, bei gleicher Arbeitsweise entsprechend kürzer ausgebildet werden können.

In einer Weiterbildung der Erfindung wird der Zwischenflügel in der Transportstellung über die vertikale Stellung hinaus nach innen schwenkbar ausgebildet.

Hierdurch kann die Schwenkachse zum Einschwenken des Zwischenflügels in Transportstellung soweit als möglich nach außen verlagert werden, ohne dass der Außenflügel in Transportstellung über die Transportbreite des Fahrzeugs hinausragt.

Der Außenflügel wird hierzu gegenüber dem Zwischenflügel um im Wesentlichen 180° nach außen schwenkbar ausgebildet. Bei dieser Ausführungsform ist der Außenflügel gegenüber dem Zwischenflügel maximal verschwenkt, so dass er gegebenenfalls auch am Zwischenflügel bzw. den daran angebrachten Maschinenkomponenten anliegen kann. Hierdurch ist eine stabile Lage des Außenflügels mit den zugehörigen Maschinenteilen am Zwischenflügel herzustellen. Weiterhin ist bei dieser maximalen Verschwenkung des Außenflügels der Neigungswinkel des Zwischenflügels nach innen hin minimal, d.h. gerade so groß, dass die gewünschte Transportbreite erreicht wird, ohne dass sich die Zwischenflügel in den Mittelbereich und somit in das Blickfeld des Fahrers in Geradeaus-Richtung bewegen.

Insbesondere in der oben beschriebenen Ausführung mit einer vergleichsweise breiten, gegebenenfalls sich über die gesamte Fahrzeugbreite erstreckenden Basiseinheit, sowie außenseitig sich anschließenden Zwischenflügeln und Außenflügeln wird die Anzahl der vorgesehenen Mäh- und Einzugsorgane ausgehend von der Basiseinheit hin bis zum Außenflügel verkleinert. Somit werden die in Arbeitstellung am weitesten außen liegenden Außenflügel kürzer und leichter im Verhältnis zum Zwischenflügel, der wiederum kürzer und leichter in Relation zur Basiseinheit bzw. dessen Aufbau ausgestaltet werden kann. Somit wird die Belastung der Schwenkmechanismen reduziert, je weiter außen diese liegen.

Mechanische Belastungen der Schwenkmechanismen können durch verschiedene Ursachen bewirkt werden. So müssen sie beispielsweise in der vorwärtsbewegung des Fahrzeugs mitgeführt werden. Hierdurch ergibt sich entweder aufgrund des Bodenkontakts oder aber auch durch den Gegendruck der zu erntenden Pflanzen eine Gegenkraft nach hinten. Je kürzer die entsprechenden Flügel ausgebildet werden, umso schwächer wird das entsprechende Drehmoment, das auf die Schwenkmechanismen einwirkt. Darüber hinaus können kürzere und leichtere Schwenkflügel leichter angehoben werden, d.h. die entsprechenden Antriebsorgane können kleiner dimensioniert werden. Weiterhin ergibt sich durch kürzere und leichtere Seitenflügel auch eine geringere Belastung der Schwenkmechanismen in der Transportstellung, beispielsweise durch Stöße, die durch Fahrbahnunebenheiten, Brems- und Lenkvorgänge oder dergleichen hervorgerufen werden.

Um in Fahrtrichtung ein unbeeinträchtigtes Sichtfeld zu bewerkstelligen, wird die Transportstellung vorteilhafterweise so ausgebildet, dass die beidseitigen Zwischenflügel und die daran befestigten Außenflügel derart voneinander beabstandet sind, dass der Mittelbereich freibleibt.

Vorzugsweise wird die Schwenkachse zwischen dem Zwischenflügel und dem Außenflügel bezogen auf die Arbeitsstellung im bodennahen Bereich angeordnet. Hierdurch ist eine Verschwenkung des Außenflügels im Verhältnis zum Zwischenflügel um 180° ohne größere konstruktive Maßnahmen mit Hilfe einer einfachen Achsenausführung möglich.

Weiterhin kann bei Bedarf rückseitig am Zwischenflügel und am Außenflügel eine Rückwand vorgesehen werden, an der die abgemähten und eingezogenen Pflanzenstängel nach innen entlanggeführt werden können. In der beschriebenen Ausführungsform, bei der der Außenflügel gegenüber dem Zwischenflügel nach unten bzw. nach außen abgeschwenkt wird, ist es möglich, die jeweiligen Rückenwände des Außenflügels sowie des Zwischenflügels so auszubilden, dass sie im Wesentlichen über die gesamte Höhe der Rückwand in Arbeitsstellung aneinandergefügt werden können. Hierbei ist eine Anordnung möglich, bei der die Rückwände auf Stoß gestellt sind. Dies ist bei einer Schwenkbewegung nach innen nicht möglich. Hier muss entweder wie im oben angeführten Stand der Technik beschrieben ein elastischer Zwischenbereich vorgesehen oder aber eine Überlappung zweier, bezogen auf die Fahrtrichtung versetzt angeordneter Wandbereiche vorgesehen werden.

Die Schwenkachse zwischen der Basiseinheit und dem Zwischenflügel wird bevorzugt in der oberen Hälfte des Aufbaus, der die Mäh- und Einzugsorgane sowie die Rückwand umfasst, angeordnet. Hierdurch ist mit Hilfe einer einfachen Schwenkachse die Schwenkbewegung der Zwischenflügel nach innen hin möglich, ohne das es zum Anschlag einzelner Komponenten gegeneinander kommt. Wird die Schwenkachse hierbei etwas tiefer als der obere Rand der Rückwand angeordnet, so empfiehlt es sich, diese zur Schwenkachse hin abzuschrägen, um so einen freien Winkelbereich für die Schwenkbewegung herzustellen.

Wird die Schwenkachse so weit oben angesetzt, dass sie sich auf Höhe des oberen Randes der Rückwand befindet, so kann auch an dieser Verbindungsstelle eine Fügung auf Stoss realisiert werden.

Die erfindungsgemäße Erntemaschine kann als Anbaugerät für ein landwirtschaftliches Fahrzeug oder auch als Teil einer selbstfahrenden Erntemaschine ausgebildet sein.

Ein Ausführungsbeispiel der Erfindung ist in der Zeichnung dargestellt und wird anhand der Figuren nachfolgend näher erläutert.

Im Einzelnen zeigen:
- Figur 1: Eine Draufsicht auf eine erfindungsgemäße Erntemaschine,
- Figur 2: eine Frontansicht auf eine Maschine gemäß Figur 1 in Arbeitsstellung,
- Figur 3: eine Übergangsposition einer Erntemaschine gemäß Figur 2 während des Übergangs in die Transportstellung,
- Figur 4: eine weitere Übergangsposition beim Übergang in die Transportstellung und
- Figur 5: eine Frontansicht einer erfindungsgemäßen Erntemaschine in der Transportstellung.

Die Erntemaschine 1 umfasst ein schematisch anhand von vorderen Laufrädern 2 und Einzugswalzen 3 für das Erntegut schematisch dargestelltes Fahrzeug 4. Am Fahrzeug 4 ist auf nicht näher dargestellter Weise ein Erntevorsatz 5 angebracht, der über das Fahrzeug 4 auf herkömmliche Weise angetrieben werden kann.

Der Erntevorsatz umfasst eine mittig und frontseitig vor dem Fahrzeug 4 angeordnete Basiseinheit 6, an der beidseits jeweils eine als Zwischenflügel 7 und eine als Außenflügel 8 ausgebildete Mäh- und Einzugseinheit schwenkbar angelenkt ist.

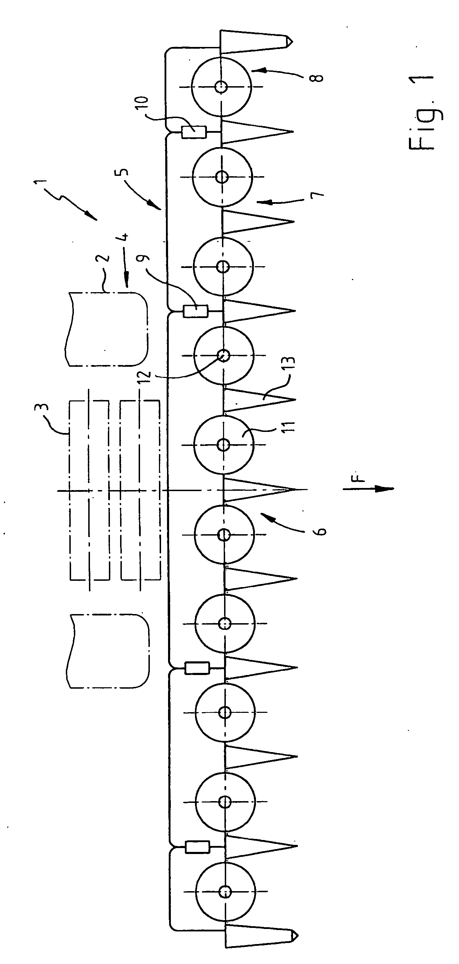

Die Schwenkachsen 9, 10 liegen hierbei in Fahrtrichtung F. An der Basiseinheit 6 sowie den Zwischenflügeln 7 und Außenflügeln 8 sind Mäh- und Einzugsorgane 11 angeordnet, die um eine im Wesentlichen vertikale Rotationsachse 12 (bezogen auf die Arbeitsstellung gemäß Figur 1) rotierbar sind. Die einzelnen Mäh- und Einzugsorgane 11 sind durch Teilerfinger 13 voneinander abgetrennt, die das beim Fahren in Fahrtrichtung F auf den Erntevorsatz 5 treffende, nicht näher dargestellte Erntegut dem jeweiligen Mäh- und Einzugsorgan 11 zuordnen.

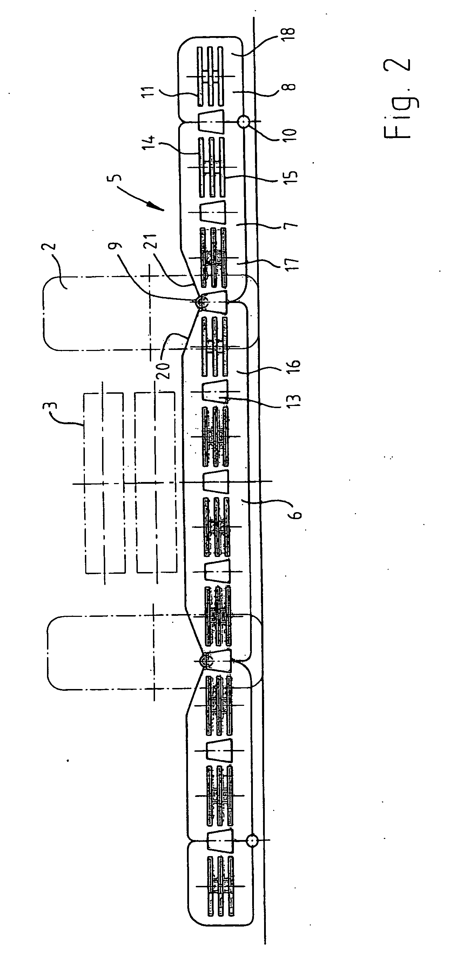

Wie anhand von Figur 2 erkennbar ist, sind die Mäh- und Einzugsorgane 11 trommelförmig aufgebaut und umfassen einzelne Mitnehmerscheiben 14 sowie wenigstens eine bodenseitige Mähscheibe 15. Das Mähen und Mitnehmen des stängeligen Ernteguts, insbesondere der Maispflanzen in den Mäh- und Einzugsorganen 11 vollzieht sich in bekannter Weise, sodass auf die spezielle Ausgestaltung der Mäh- und Einzugsorgane 11 und deren Funktion an dieser Stelle nicht eingegangen wird.

Rückseitig sind an der Basiseinheit 6, den Zwischenflügeln 7 und den Außenflügeln 8 jeweils Wandelemente 16, 17, 18 angeordnet, an denen das Erntegut nach innen in Richtung zu den Einzugswalzen 3 geführt werden kann.

In der dargestellten Position gemäß den Figuren 1 und 2 befindet sich der Erntevorsatz 5 in der Arbeitsstellung mit maximaler Breite.

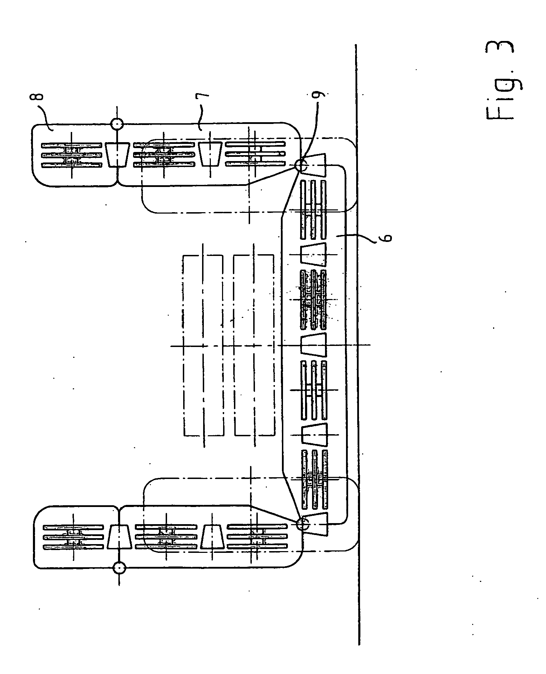

Zum Einschwenken in die Transportstellung werden zunächst die Zwischenflügel 7 in die vertikale Position gemäß Figur 3 geschwenkt. Diese Schwenkbewegung wird über übliche Antriebsmittel, beispielsweise über Hydraulikzylinder vorgenommen.

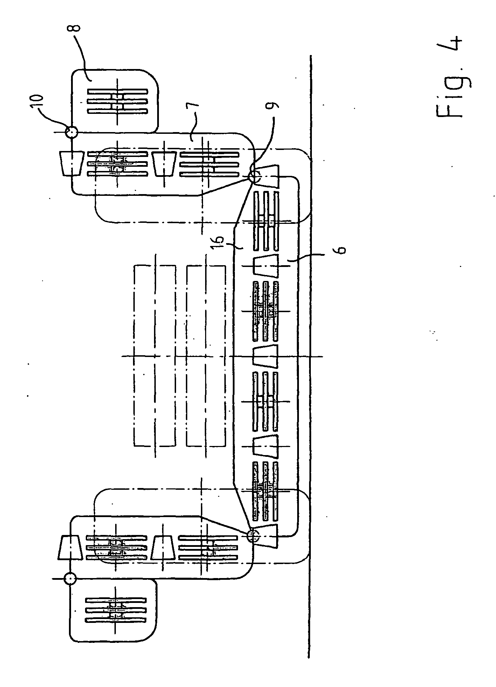

Ausgehend von dieser vertikalen Zwischenposition der zwischenflügel 7 kann nun gemäß der Darstellung in Figur 4 jeder Außenflügel 8 um 180 °C um die Schwenkachse 10 abgeklappt werden. Auch diese Schwenkbewegung wird mit üblichen Antriebsmitteln, beispielsweise einem weiteren Hydraulikzylinder durchgeführt. Anhand von Figur 4 ist zudem gut erkennbar, dass diese 180 °C-Drehung um eine einfache Schwenkachse 10 dadurch möglich wird, das die Schwenkachse 10 bezogen auf die Arbeitstellung gemäß Figur 2 im bodennahen Bereich angeordnet ist. Die Position gemäß Figur 4 ist demnach erreichbar, ohne das einzelne Komponenten des Außenflügels 8 mit dem Zwischenflügel 7 kollidieren.

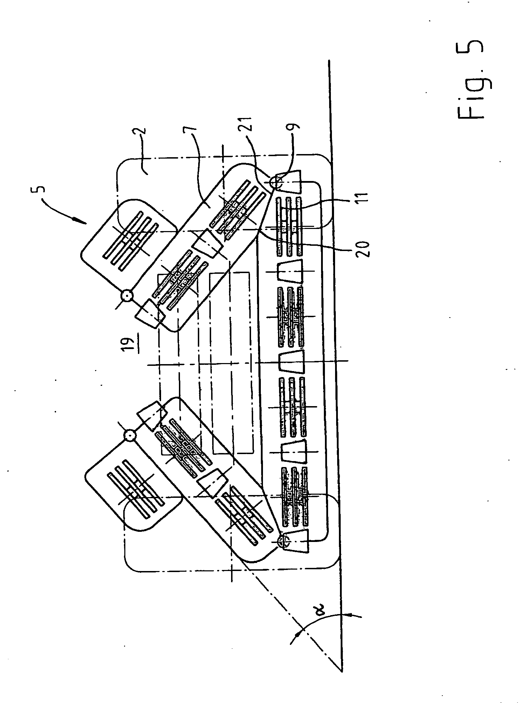

In einem weiteren Schritt wird anschießend jeder Zwischenflügel 7 nach innen geneigt, bis die Stellung gemäß Figur 5 erreicht wird. In dieser Stellung ragt der Erntevorsatz 5 an keiner Stelle seitlich über die Laufräder 2 hinaus. Die Zwischenflügel 7 sind um den Winkel α nach innen geneigt, es verbleibt jedoch ein Zwischenraum 19, der eine freie Sicht auf die Straße von der oberhalb die Laufräder 2 angeordneten Fahrerkabine (nicht näher dargestellt) erlaubt.

Die Verriegelung der Transportstellung kann mechanisch über entsprechende Regelmechanismen oder aber durch hydraulische Verspannung erzielt werden. Sofern hydraulische Arbeitszylinder für die Schwenkbewegungen beim Übergang zwischen der Arbeitsstellung und der Transportstellung bzw. umgekehrt verwendet werden, kann über eine hydraulische Verriegelung dieser Arbeitszylinder die Transportstellung gesichert werden. Auch eine Kombination zwischen mechanischer Verriegelung und hydraulischer Verspannung ist ohne Weiteres denkbar. Die mechanische Verriegelung kann dabei separat von den Arbeitszylindern oder auch in Form einer sogenannten Endlagenverriegelung der Arbeitszylinder verwirklicht werden.

Wie insbesondere anhand von Figur 4 erkennbar ist, liegen die Schwenkachsen 9 in der oberen Hälfte des Randelements 16, das im Bereich der Basiseinheit 6 die Rückwand bildet. Die Schwenkachse 9 befindet sich auf der Höhe des oberen Endes der Mäh- und Einzugsorgane 11. Auf diese Weise kann die Transportstellung gemäß Figur eingenommen werden, ohne das die Mäh- und Einzugsorgane 11 kollidieren. Lediglich die Wandelemente 16 bzw. 17 der Basiseinheit 6 sowie des Zwischenflügels 7 müssen aufgrund des Überstands über die Mäh- und Einzugsorgane 11 und somit die Schwenkachse 9 im Bereich der Schwenkachse 9 leicht abgeschrägt werden. Die Abschrägungen 20, 21 werden hierbei so gewählt, dass sie beim Einstellen des Schwenkwinkels α in der Transportstellung aneinander gefügt sind. Werden die Abschrägungen 20, 21 zudem so ausgeführt, dass sie sich in der Schwenkachse 9 treffen, so bedeutet dies kleinste erforderliche Ausnehmungen in der durch die Wandelemente 16, 17, 18 gebildeten Rückwand.

Die die Schwenkachsen 9, 10 beinhaltenden Gelenke werden zweckmäßigerweise als Scharniergelenke ausgebildet, die die während des Erntevorgangs aufgrund der Vorwärtsfahrt der Erntemaschine und dem auftreffendem Erntegut entstehenden Kräfte nach hinten bzw. die daraus entstehenden Drehmomente aufnehmen.

Um diese waagerechte Arbeitsstellung auch beim Anheben des Basisteils 6 zu gewährleisten, können die Scharniergelenke weiterhin so ausgebildet werden, dass ein Abklappen nach außen zwischen den Zwischenflügeln 7 und der Basiseinheit 6 beispielsweise über Anschläge unterbunden ist. Andererseits lässt sich die waagerechte Arbeitsstellung jedoch auch ohne mechanische Anschläge über die Antriebsorgane, beispielsweise über hydraulische Arbeitszylinder über diese Arbeitszylinder einstellen und fixieren. In beiden Fällen ist die Einstellung der Arbeitshöhe über die Höhenverstellung der Basiseinheit möglich.

### Bezugszeichenliste:

- 1: Erntemaschine
- 2: Laufrad
- 3: Einzugswalze
- 4: Fahrzeug
- 5: Erntevorsatz
- 6: Basiseinheit
- 7: Zwischenflügel
- 8: Außenflügel
- 9: Schwenkachse
- 10: Schwenkachse
- 11: Mäh- und Einzugsorgan
- 12: Rotationsachse
- 13: Teilerfinger
- 14: Mitnehmerscheibe
- 15: Mähscheibe
- 16: Wandelement
- 17: Wandelement
- 18: Wandelement
- 19: Zwischenraum
- 20: Abschrägung
- 21: Abschrägung

## Patentansprüche

1. Erntemaschine zum Ernten von stängelartigem Erntegut wie Mais oder dergleichen mit wenigstens zwei Mäh- und Einzugseinheiten, die eine Reihe von insbesondere trommelartigen und um im Wesentlichen vertikale Drehachsen rotierbare, an Tragelementen befestigte Mäh- und Einzugsorgane aufweisen, wobei wenigstens eine Mäh- und Einzugseinheit um eine im Wesentlichen in Fahrtrichtung stehende Schwenkachse schwenkbar ist, wobei wenigstens zwei Mäh- und Einzugseinheiten (7, 8) in entgegengesetzter Drehrichtung schwenkbar ausgebildet sind, **dadurch gekennzeichnet, dass** wenigstens eine als Zwischenflügel (7) ausgebildete und wenigstens eine als Außenflügel (8) ausgebildete Mäh- und Einzugseinheit außenseitig an einer Basiseinheit (6) angebracht sind, wobei der Zwischenflügel (7) und der Außenflügel (8) in entgegengesetztem Drehsinn schwenkbar sind.

2. Maschine nach Anspruch 1, **dadurch gekennzeichnet, dass** eine Basiseinheit (6) vorgesehen ist, die im Wesentlichen mittig vor der Erntemaschine (1) angebracht ist.

3. Maschine nach einem der vorgenannten Ansprüche, **dadurch gekennzeichnet, dass** sich die Basiseinheit (6) im Wesentlichen über die gesamte Fahrzeugbreite der Erntemaschine (1) in Transportstellung erstreckt.

4. Maschine nach einem der vorgenannten Ansprüche, **dadurch gekennzeichnet, dass** beidseits der Basiseinheit (6) jeweils ein Zwischenflügel (7) und ein Außenflügel (8) vorgesehen sind.

5. Maschine nach einem der vorgenannten Ansprüche, **dadurch gekennzeichnet, dass** der oder die Zwischenflügel (7) über die vertikale Ausrichtung hinaus nach innen schwenkbar sind.

6. Maschine nach einem der vorgenannten Ansprüche, **dadurch gekennzeichnet, dass** der oder die Außenflügel (8) gegenüber dem jeweiligen Zwischenflügel (7) um im Wesentlichen 180 °C nach außen schwenkbar ausgebildet sind.

7. Maschine nach einem der vorgenannten Ansprüche, **dadurch gekennzeichnet, dass** die Basiseinheit (6), jeder Zwischenflügel (7) und jeder Außenflügel (8) jeweils ein Mäh- und Einzugsorgan (11) trägt.

8. Maschine nach einem der vorgenannten Ansprüche, **dadurch gekennzeichnet, dass** in Transportstellung die beidseitigen Zwischenflügel (7) und die beidseitigen Außenflügel (8) derart voneinander beabstandet sind, dass sich in gerader Ausrichtung ein von Zwischenflügeln (7) und Außenflügeln (8) unbeeinträchtigtes Sichtfeld ergibt.

9. Maschine nach einem der vorgenannten Ansprüche, **dadurch gekennzeichnet, dass** die Schwenkachse (10) zwischen dem Zwischenflügel (7) und dem Außenflügel (8) bezogen auf die Arbeitsstellung im bodennahen Bereich angeordnet ist.

10. Maschine nach einem der vorgenannten Ansprüche, **dadurch gekennzeichnet, dass** am Zwischenflügel (7) und am Außenflügel (8) jeweils ein eine Rückwand bildendes Wandelement (17, 18) vorgesehen ist, die sich in Arbeitsstellung im Wesentlichen über ihre gesamte Höhe aneinander fügen.

11. Maschine nach einem der vorgenannten Ansprüche, **dadurch gekennzeichnet, dass** die Basiseinheit (6) ein eine Rückwand bildendes Wandelement (16) umfasst, wobei das Wandelement (16) der Basiseinheit (6) und das Wandelement (17) des Zwischenflügels (7) zur gemeinsamen Schwenkachse (9) hin abgeschrägt sind.

12. Maschine nach einem der vorgenannten Ansprüche, **dadurch gekennzeichnet, dass** die Schwenkachse (9) zwischen der Basiseinheit (6) und dem Zwischenflügel (7) in der oberen Hälfte der Rückwand (16, 17), insbesondere im oberen Endbereich der Mäh- und Einzugsorgane (11) angeordnet ist.

13. Erntemaschine nach einem der vorgenannten Ansprüche, **dadurch gekennzeichnet, dass** sie als Anbaugerät für ein Fahrzeug ausgebildet ist.

14. Erntemaschine nach einem der vorgenannten Ansprüche, **dadurch gekennzeichnet, dass** sie als Teil einer selbstfahrenden Erntemaschine ausgebildet ist.

## Claims

1. Harvesting machine for harvesting stalk crops, such as maize or the like, having at least two cutting and intake units, which have a series of in particular drum-like cutting and intake elements which are rotatable about generally vertical rotary axes and secured to support elements, wherein at least one cutting and intake unit (7, 8) is pivotable about a pivot axis which is upright in travelling direction, wherein at least two cutting and intake units (7, 8) are designed to be pivotable in opposite rotary directions, **characterised in that** at least one cutting and intake element designed as an intermediate blade (7) and at least one cutting and intake unit designed as an outer blade (8) are attached on the outside to a base unit (6), wherein the intermediate blade (7) and the outer blade (8) can be pivoted in opposite directions.

2. Machine according to claim 1, **characterised in that** a base unit (6) is provided which is attached essentially centrally in front of the harvesting machine (1).

3. Machine according to one of the preceding claims, **characterised in that** the base unit (6) extends generally over the entire vehicle width of the harvesting machine (1) in transport position.

4. Machine according to one of the preceding claims, **characterised in that** an intermediate blade (7) and an outer blade (8) are provided respectively on both sides of the base unit (6).

5. Machine according to one of the preceding claims, **characterised in that** the intermediate blade or blades (7) can be pivoted inwardly via the vertical alignment.

6. Machine according to one of the preceding claims, **characterised in that** the outer blade or blades (8) are designed to pivot outwards essentially through 180° relative to the respective intermediate blade (7).

7. Machine according to one of the preceding claims, **characterised in that** the base unit (6), each intermediate blade (7) and each outer blade (8) supports a cutting and intake element (11) respectively.

8. Machine according to one of the preceding claims, **characterised in that** the intermediate blades (7) on both sides and the outer blades (8) on both sides are spaced from one another in transport position, so as to provide a field of view which is unimpaired by the intermediate blades (7) and outer blades (8) in an upright alignment.

9. Machine according to one of the preceding claims, **characterised in that** the pivot axis (10) is arranged close to the ground between the intermediate blade (7) and the outer blade (8) in relation to the working position.

10. Machine according to one of the preceding claims, **characterised in that** on the intermediate blade (7) and on the outer blade (8) respectively a wall element (17, 18) forming a rear wall is provided, which join together in working position essentially over their entire height.

11. Machine according to one of the preceding claims, **characterised in that** the base unit (6) comprises a wall element (16) forming a rear wall, wherein the wall element (16) of the base unit (6) and the wall element (17) of the intermediate blade (7) are tapered towards the common pivot axis (9).

12. Machine according to one of the preceding claims, **characterised in that** the pivot axis (9) is arranged between the base unit (6) and the intermediate blade (7) in the upper half of the rear wall (16, 17), in particular in the upper end area of the cutting and intake elements (11).

13. Harvesting machine according to one of the preceding claims, **characterised in that** it is designed as an attachment device for a vehicle.

14. Harvesting machine according to one of the preceding claims, **characterised in that** it is designed as part of a self-propelled harvesting machine.

## Revendications

1. Machine pour récolter des plantes à tiges telles que le maïs ou analogues, comportant au moins deux unités de fauchage et alimentation qui présentent une rangée d'organes de fauchage et alimentation, en particulier de type tambours, tournant autour d'axes de rotation essentiellement verticaux et fixés sur des éléments de support, au moins une unité de fauchage et alimentation pouvant être pivotée autour d'un axe de pivotement vertical essentiellement dans le sens de la marche, au moins deux unités de fauchage et alimentation (7, 8) étant réalisées de manière à pouvoir pivoter dans un sens de rotation opposé,
**caractérisée en ce qu'**au moins une unité de fauchage et alimentation réalisée en tant qu'aile intermédiaire (7) et au moins une unité de fauchage et alimentation réalisée en tant qu'aile extérieure (8) sont agencées du côté extérieur sur une unité de base (6), l'aile intermédiaire (7) et l'aile extérieure (8) pouvant être pivotées dans un sens de rotation opposé.

2. Machine selon la revendication 1,
**caractérisée en ce qu'**une unité de base (6) est prévue, laquelle est installée essentiellement au centre devant la machine à moissonner (1).

3. Machine selon l'une des revendications précédentes,
**caractérisée en ce que** l'unité de base (6) s'étend, en position de transport, essentiellement sur l'ensemble de la largeur de véhicule de la machine à moissonner (1).

4. Machine selon l'une des revendications précédentes,
**caractérisée en ce qu'**il est prévu des deux côtés de l'unité de base (6) une aile intermédiaire (7) et une aile extérieure (8).

5. Machine selon l'une des revendications précédentes,
**caractérisée en ce que** l'aile ou les ailes intermédiaire(s) (7) peuvent être pivotées vers l'intérieur au-delà de l'alignement vertical.

6. Machine selon l'une des revendications précédentes,
**caractérisée en ce que** l'aile ou les ailes extérieure(s) (8) sont réalisées pivotantes vers l'extérieur, essentiellement de 180°, par rapport à l'aile intermédiaire concernée (7).

7. Machine selon l'une des revendications précédentes,
**caractérisée en ce que** l'unité de base (6), chaque aile intermédiaire (7) et chaque aile extérieure (8) portent un organe de fauchage et alimentation (11).

8. Machine selon l'une des revendications précédentes,
**caractérisée en ce que**, en position de transport, les ailes intermédiaires (7) des deux côtés et les ailes extérieures (8) des deux côtés sont espacées de telle manière qu'il y ait, dans l'alignement droit devant, un champ visuel non gêné par les ailes intermédiaires (7) et les ailes extérieures (8).

9. Machine selon l'une des revendications précédentes,
**caractérisée en ce que** l'axe de pivotement (10) entre l'aile intermédiaire (7) et l'aile extérieure (8) est agencé dans la zone proche du sol rapportée à la position de travail.

10. Machine selon l'une des revendications précédentes,
**caractérisée en ce qu'**il est prévu sur l'aile intermédiaire (7) et sur l'aile extérieure (8) un élément de paroi (17, 18) formant un panneau arrière, lesquels éléments de paroi se rejoignent essentiellement sur toute leur hauteur en position de travail.

11. Machine selon l'une des revendications précédentes,
**caractérisée en ce que** l'unité de base (6) comprend un élément de paroi (16) formant un panneau arrière, l'élément de paroi (16) de l'unité de base (6) et l'élément de paroi (17) de l'aile intermédiaire (7) étant biseautés en direction de l'axe de pivotement commun (9).

12. Machine selon l'une des revendications précédentes,
**caractérisée en ce que** l'axe de pivotement (9) entre l'unité de base (6) et l'aile intermédiaire (7) est agencé dans la moitié supérieure du panneau arrière (96, 17), en particulier dans la zone d'extrémité supérieure des organes de fauchage et alimentation (11).

13. Machine à moissonner selon l'une des revendications précédentes,
**caractérisée en ce qu'**elle est réalisée en tant qu'outil porté pour un véhicule.

14. Machine à moissonner selon l'une des revendications précédentes,
**caractérisée en ce qu'**elle est réalisée en tant que partie d'une machine à moissonner automotrice.
